(19) Europäisches Patentamt
European Patent Office
Office européen des brevets

(11) **EP 3 415 958 B1**

(12) **EUROPÄISCHE PATENTSCHRIFT**

(45) Veröffentlichungstag und Bekanntmachung des Hinweises auf die Patenterteilung:
**19.02.2020 Patentblatt 2020/08**

(51) Int Cl.:
*G01W 1/02* (2006.01)     *G01W 1/08* (2006.01)
*G01N 25/56* (2006.01)     *G01N 27/22* (2006.01)

(21) Anmeldenummer: **18173993.9**

(22) Anmeldetag: **24.05.2018**

(54) **VERFAHREN ZUM BETRIEB EINER SENSORANORDNUNG UND HIERZU GEEIGNETE SENSORANORDNUNG**

METHOD FOR OPERATING A SENSOR ARRANGEMENT AND APPROPRIATE SENSOR ARRANGEMENT

PROCÉDÉ DE FONCTIONNEMENT D'UN DISPOSITIF CAPTEUR ET DISPOSITIF CAPTEUR APPROPRIÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.06.2017 DE 102017210064**

(43) Veröffentlichungstag der Anmeldung:
**19.12.2018 Patentblatt 2018/51**

(73) Patentinhaber: **E+E ELEKTRONIK GES.M.B.H.**
**4209 Engerwitzdorf (AT)**

(72) Erfinder: **MITTER, Helmut**
**4202 Hellmonsödt (AT)**

(74) Vertreter: **Hofmann, Ernst**
**Dr. Johannes Heidenhain GmbH,**
**Patentabteilung,**
**Postfach 12 60**
**83292 Traunreut (DE)**

(56) Entgegenhaltungen:
EP-A1- 0 801 302     EP-A1- 1 505 387
EP-A2- 0 640 831     EP-A2- 0 645 620
WO-A1-2014/128348     DE-A1- 2 851 686
GB-A- 2 047 431     GB-A- 2 241 787
JP-A- 2014 231 937     US-A- 4 893 508

- **LASSE MAKKONEN ET AL: "Humidity Measurements in Cold and Humid Environments", BOUNDARY-LAYER METEOROLOGY, KLUWER ACADEMIC PUBLISHERS, DO, Bd. 116, Nr. 1, 1. Juli 2005 (2005-07-01), Seiten 131-147, XP019232845, ISSN: 1573-1472, DOI: 10.1007/S10546-004-7955-Y**
- **E+e Elektronik Gmbh: "HMC03M - Heated Humidity Sensor for Radiosondes and Weather Balloons", , 13. April 2017 (2017-04-13), Seiten 1-2, XP055517336, Gefunden im Internet: URL:http://downloads.epluse.com/fileadmin/ data/product/hmc03m/datasheet_HMC03M.pdf [gefunden am 2018-10-19]**
- **World Meteorological Organization (wmo): "Guide to meteorological instruments and methods of observation. Chapter 4. Measurement of humidity. WMO-No.8 (CIMO Guide)", , 1. Januar 2014 (2014-01-01), Seiten 127-165, XP055517506, ISBN: 978-92-6-310008-5 Gefunden im Internet: URL:https://library.wmo.int/doc_num.php?ex plnum_id=3151 [gefunden am 2018-10-19]**

**Beschreibung**

GEBIET DER TECHNIK

Die vorliegende Erfindung betrifft ein Verfahren zum Betrieb einer Sensoranordnung sowie eine hierzu geeignete Sensoranordnung. Insbesondere geeignet sind das erfindungsgemäße Verfahren sowie die erfindungsgemäße Sensoranordnung zur Feuchtemessung in Radiosonden.

STAND DER TECHNIK

Aus der EP 0 801 302 A1 ist ein Verfahren sowie eine gattungsgemäße Vorrichtung zur Feuchtemessung bekannt, wobei die entsprechende Vorrichtung einen Feuchtesensor, einen Temperatursensor sowie ein Heizelement umfasst. Um insbesondere im Hochfeuchtebereich eine Verfälschung der Messergebnisse zu verhindern, wird in dieser Druckschrift vorgeschlagen, beim Erreichen eines bestimmten Feuchte-Grenzwerts den Feuchtesensor mit Hilfe des Heizelements zu heizen, also bei erhöhter Temperatur zu betreiben.

Während dieses Vorgehen für übliche Feuchtemessungen eine zufriedenstellende Lösung darstellt, ergeben sich im Fall des Einsatzes entsprechender Vorrichtungen in Radiosonden bestimmte Probleme.

Derartige Radiosonden bestehen üblicherweise aus einem Ballon, gefüllt mit Helium oder Wasserstoff, an dem neben einer GPS-Einheit eine Sensoranordnung zur messtechnischen Erfassung unterschiedlicher Klimaparameter angeordnet ist. Über die Sensoranordnung kann dabei etwa die Bestimmung der Temperatur und der relativen Feuchte der vom Ballon durchflogenen Atmosphärenbereiche erfolgen. Die Sensoranordnung ist hierbei in einem hinreichend großen Abstand unterhalb des Ballons aufgehängt, um eine eventuelle Messungsbeeinflussung durch den Ballon zu vermeiden. Während des Aufstieges werden die über die Sensoranordnung generierten Messdaten bzgl. Temperatur, relativer Feuchte sowie die Sondenposition laufend an eine Bodenstation gesendet, so dass nach der entsprechenden Auswertung der Messdaten ein Höhenprofil bzgl. relativer Feuchte, Temperatur, Windgeschwindigkeit und Windrichtung erstellbar ist. Die maximale Aufstiegshöhe derartiger Radiosonden kann über 30km betragen, typisch sind Aufstiegshöhen im Bereich zwischen 15km und 20km.

Insbesondere bei der Feuchtemessung resultieren in solchen Radiosonden Probleme, wenn Luftschichten mit unterschiedlichsten Temperatur- und Feuchteverhältnissen durchflogen werden. So können etwa in tropischen Bereichen Temperaturen von 30°C und relative Feuchten bis zu 95%rH vorliegen, während etwa in hohen Atmosphärenschichten Temperaturen bis zu -80°C vorherrschen und nahezu kein Wassergehalt vorliegt.

Als eine der größten Fehlerursachen ist in Radiosonden die Möglichkeit der Kondensation und daraus das Vereisen der Sensorik in der Sensoranordnung bekannt. Eine eventuelle Vereisung hat im Fall der Feuchtemessung üblicherweise Fehlmessungen zur Folge. Eine derartige Vereisung kann dabei auch nach dem Verlassen der entsprechenden Luftschichten noch längere Zeit vorliegen. Es kann somit eine Störung und damit eine Verfälschung der Messergebnisse auch über längere Zeit andauern.

Neben verschiedenen anderen Ansätzen ist auch das Heizen der Sensorik für die Feuchtemessung eine Möglichkeit, die Vereisung und damit entsprechende Fehlmessungen zu vermeiden.

So wird etwa in der WO 2014/128348 A1 vorgeschlagen, zum Vermeiden der Vereisung die Sensorik für die Feuchtemessung kontinuierlich zu beheizen. Über die permanente Beheizung wird jedoch die Empfindlichkeit der Feuchtemessungs-Sensorik und damit deren Messgenauigkeit verringert. Ferner erfordert die dauerhafte Beheizung einen erhöhten Energiebedarf, was aufgrund der batteriegestützten Energieversorgung der Radiosonde ebenfalls problematisch ist.

Auch das aus der eingangs genannten Druckschrift EP 0 801 302 A1 bekannte Heizverfahren ist insbesondere bei sehr niedrigen Temperaturen nicht geeignet, eine Vereisung der Sensorik zur Feuchtemessung zuverlässig zu verhindern. Dies liegt daran, dass bei derartigen Temperaturen der Feuchte-Grenzwert im Bereich von 75% gemäß der sog. WMO-Definition (World Metrological Organization) nicht erreicht wird, ab dem der Heizbetrieb vorgesehen ist; üblicherweise vereist das System bereits vorher.

Die US 4 893 508 A offenbart ein weiteres Verfahren zum Betrieb einer Sensoranordnung, insbesondere zur Bestimmung der relativen Feuchte über Wasser in Radiosonden. Die Sensoranordnung umfasst einen Feuchtesensor, einen Temperatursensor sowie ein Heizelement. Der Feuchtesensor wird dabei zumindest teilweise über das Heizelement beheizt, wenn die gemessene relative Feuchte über Wasser einen konstanten, temperaturunabhängigen Feuchte-Grenzwert überschreitet, wobei der Feuchte-Grenzwert als Grenzfeuchte bezüglich Sättigung über Wasser gewählt wird. Das vorstehend diskutierte Vereisungs-Problem insbesondere bei sehr tiefen Temperaturen ist über die in dieser Druckschrift vorgeschlagenen Maßnahmen nicht zufriedenstellend zu lösen.

Aus der EP 1 505 387 A1 ist ein Verfahren zur Feuchtemessung bekannt, insbesondere zur Bestimmung der relativen Feuchte im Hochfeuchtebereich. Hierzu ist eine Sensoranordnung bestehend aus einem kapazitiven Feuchtesensorelement, einem Temperatursensorelement sowie einem Heizelement vorgesehen. Zumindest in einem Teil des Feuchtemessbereichs wird das Feuchtesensorelement beheizt. Über eine Folgeelektronik wird aus der im Heizbetrieb erforderlichen Heizleistung sowie der gemessenen lokalen Sensoranordnungstemperatur ferner die Umgebungstemperatur ermittelt, um darüber die relative Feuchte zu bestimmen. Auch aus dieser Druckschrift ist keine Lösung zum oben erwähnten Problem der Vereisung bei sehr tiefen Temperaturen zu entnehmen.

## ZUSAMMENFASSUNG DER ERFINDUNG

Der vorliegenden Erfindung liegt die Aufgabe zugrunde, ein Verfahren zum Betrieb einer Sensoranordnung sowie eine entsprechende Sensoranordnung zur Feuchtemessung anzugeben, über die auch im Fall tiefer Temperaturen Fehlmessungen aufgrund von Vereisung vermieden werden können.

Diese Aufgabe wird erfindungsgemäß durch ein Verfahren mit den Merkmalen des Anspruchs 1 und eine Sensoranordnung mit den Merkmalen des Anspruchs 10 gelöst.

Vorteilhafte Ausführungen des erfindungsgemäßen Verfahrens ergeben sich aus den Maßnahmen, die in den von Anspruch 1 abhängigen Ansprüchen aufgeführt sind.

Desweiteren wird diese Aufgabe durch eine Sensoranordnung mit den Merkmalen des Anspruchs 10 gelöst.

Vorteilhafte Ausführungen der erfindungsgemäßen Sensoranordnung ergeben sich aus den Maßnahmen, die in den von Anspruch 10 abhängigen Ansprüchen aufgeführt sind.

Das erfindungsgemäße Verfahren dient zum Betrieb einer Sensoranordnung und insbesondere zur Bestimmung der relativen Feuchte in Radiosonden. Hierbei umfasst die Sensoranordnung einen Feuchtesensor, einen Temperatursensor sowie ein Heizelement, wobei der Feuchtesensor zumindest zeitweise beheizt wird. Im Temperaturbereich unterhalb von 0°C wird ab einem vorgegebenen Feuchte-Grenzwert der Feuchtesensor über das Heizelement zumindest zeitweise beheizt, wobei der Feuchte-Grenzwert als Grenzfeuchte bezüglich Sättigung über Eis gewählt ist.

Hierbei wird der Feuchte-Grenzwert im Temperaturbereich unterhalb von 0°C aus der Standard-Definition der relativen Feuchte als konstanter Feuchte-Grenzwert gewählt, wobei sich die relative Feuchte gemäß

$$U_i = \frac{e}{e_i(t)} \cdot 100 = U_w \cdot \frac{e_w(t)}{e_i(t)}$$

ergibt, mit:

$U_i$ := relative Feuchte über Eis nach Standard-Definition
$e$ := tatsächlicher Wasserdampfpartialdruck
$e_i(t)$ := Wasserdampfpartialdruck bei Sättigung über einer Eisfläche
$U_w$ := relative Feuchte über Wasser nach WMO-Definition
$e_w(t)$ := Wasserdampfpartialdruck bei Sättigung über einer Wasserfläche

Es ist möglich, dass der Feuchte-Grenzwert im Bereich 60% $\leq U_{i,grenz} \leq$ 90% gewählt wird.

In einer vorteilhaften Variante wird der Feuchte-Grenzwert gemäß $U_{i,grenz}$ = 75% gewählt.

Desweiteren kann vorgesehen werden, dass in einem vorgegebenen Bereich zwischen einem ersten Feuchte-Grenzwert und einem zweiten Feuchte-Grenzwert der Feuchtesensor über das Heizelement mit einer konstanten Heizleistung beheizt wird, wobei die Feuchte-Grenzwerte jeweils als Grenzfeuchten bezüglich Sättigung über Eis gewählt sind.

Dabei kann der erste Feuchte-Grenzwert im Bereich 85% $\leq U_{i,grenz\_1} \leq$ 95% und der zweite Feuchte-Grenzwert im Bereich 65% $\leq U_{i,grenz\_2} \leq$ 75% gewählt wird.

Alternativ kann auch vorgesehen sein, dass der Feuchtesensor ab dem Erreichen des Feuchte-Grenzwerts über das Heizelement derart geregelt beheizt wird, dass eine konstante relative Feuchte des Feuchtesensors resultiert.

Dabei ist möglich, dass die lokale Temperatur des Feuchtesensors so geregelt wird, dass eine konstante relative Feuchte in Höhe des Feuchte-Grenzwerts resultiert.

Desweiteren kann im Temperaturbereich oberhalb von 0°C ab einem vorgegebenen Feuchte-Grenzwert der Feuchtesensor über das Heizelement zumindest zeitweise beheizt werden, wobei der Feuchte-Grenzwert als Grenzfeuchte bezüglich Sättigung über Wasser gewählt ist.

Die erfindungsgemäße Sensoranordnung ist insbesondere zur Bestimmung der relativen Feuchte in Radiosonden geeignet. Sie umfasst einen Feuchtesensor, einen Temperatursensor sowie ein Heizelement, wobei der Feuchtesensor über eine auf das Heizelement einwirkende Steuereinheit zumindest zeitweise beheizbar ist. Die Steuereinheit ist hierbei derart ausgebildet, um im Temperaturbereich unterhalb von 0°C ab einem vorgegebenen Feuchte-Grenzwert den Feuchtesensor über das Heizelement zumindest zeitweise zu beheizen, wobei der Feuchte-Grenzwert als Grenzfeuchte bezüglich Sättigung über Eis gewählt ist.

Der Feuchtesensor kann dabei als Plattenkondensator ausgebildet sein, der zwei Elektroden umfasst, zwischen denen ein feuchteempfindliches Polymer angeordnet ist und wobei eine der Elektroden feuchtedurchlässig ausgebildet ist.

Es ist ferner möglich, dass der Temperatursensor und das Heizelement als kombinierte Einheit ausgebildet sind, wobei zum Beheizen des Feuchtesensors der Messstrom über die Steuereinheit variierbar ist.

Hierzu kann der Feuchtesensor auf einer Seite eines Sensor-Substrats und benachbart hierzu die kombinierte Einheit aus Temperatursensor und Heizelement angeordnet sein.

Alternativ ist auch möglich, dass der Feuchtesensor auf einer Seite eines Sensor-Substrats angeordnet ist und benachbart hierzu das Heizelement angeordnet ist, während auf der gegenüberliegenden Seite des Sensor-Substrats der Temperatursensor angeordnet ist, der als NTC-Element ausgebildet und mittels Wärmeleitkleber am Sensor-Substrat befestigt ist.

Desweiteren kann vorgesehen sein, dass der Feuchtesensor, der Temperatursensor sowie das Heizelement in Dünnschichttechnik auf einem Sensor-Substrat aus Silizium aufgebracht sind, das mit einer Isolationsschicht versehen ist.

Über die erfindungsgemäßen Maßnahmen kann sichergestellt werden, dass auch bei tiefen Temperaturen eine Vereisung des Feuchtesensors verhindert wird. Gleichzeitig ist kein permanenter Heizbetrieb erforderlich, der im Gegensatz zum erfindungsgemäßen Verfahren mit einem deutlich höheren Energiebedarf verbunden wäre. Desweiteren ist über den bedarfsgerechten Heizbetrieb eine möglichst geringe Beeinflussung der Feuchtemessung gewährleistet. Das erfindungsgemäße Verfahren sowie die erfindungsgemäße Sensoranordnung eignen sich damit insbesondere für die Verwendung in Radiosonden.

Weitere Einzelheiten und Vorteile der vorliegenden Erfindung seien anhand der nachfolgenden Beschreibung von Ausführungsbeispielen des erfindungsgemäßen Verfahrens sowie der erfindungsgemäßen Feuchtesensor-Anordnung in Verbindung mit den Figuren erläutert.

### KURZE BESCHREIBUNG DER ZEICHNUNGEN

Es zeigt

Figur 1          eine schematisierte Darstellung einer Radiosonde;

Figur 2          eine vergrößerte Ansicht der Sensorikeinheit der Radiosonde aus Figur 1;

Figur 3          eine Darstellung der Zusammenhänge zwischen Temperatur und relativer Feuchte im Fall der Heizung einer Sensoranordnung gemäß dem Stand der Technik;

Figur 4a, 4b      jeweils eine Darstellung der Zusammenhänge zwischen Temperatur und relativer Feuchte im Fall der Heizung einer Sensoranordnung gemäß der vorliegenden Erfindung;

Figur 5a         eine Schnittansicht eines Teils eines ersten Ausführungsbeispiels einer erfindungsgemäßen Sensoranordnung;

Figur 5b         eine Draufsicht auf den Teil der Sensoranordnung aus Figur 5a;

Figur 6a         eine Schnittansicht eines Teils eines zweiten Ausführungsbeispiels einer erfindungsgemäßen Sensoranordnung;

Figur 6b         eine Draufsicht auf den Teil der Sensoranordnung aus Figur 6a;

Figur 7a         eine Schnittansicht eines Teils eines dritten Ausführungsbeispiels einer erfindungsgemäßen Sensoranordnung;

Figur 7b         eine Draufsicht auf den Teil der Sensoranordnung aus Figur 7a;

Figur 8, 9       jeweils stark schematisierte Blockschaltbilder weiterer Sensoranordnungs-Varianten in Verbindung mit der Steuereinheit.

### BESCHREIBUNG DER AUSFÜHRUNGSFORMEN

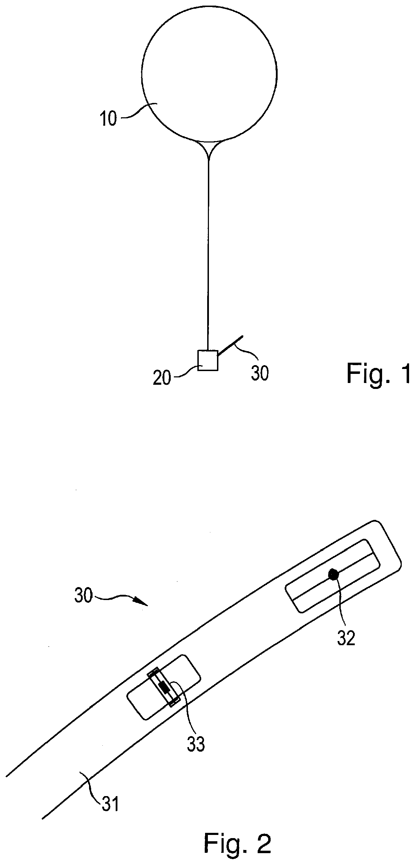

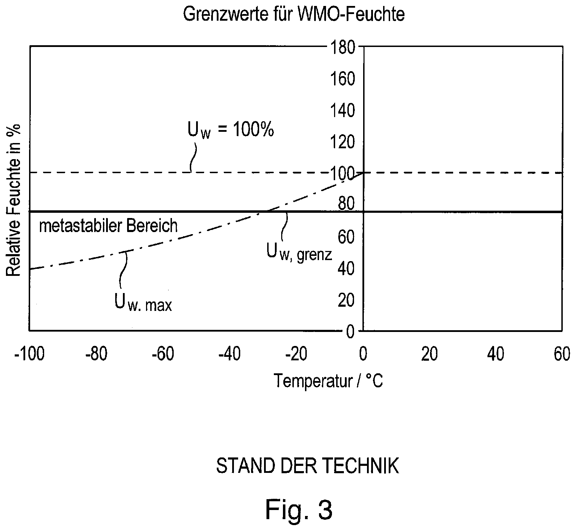

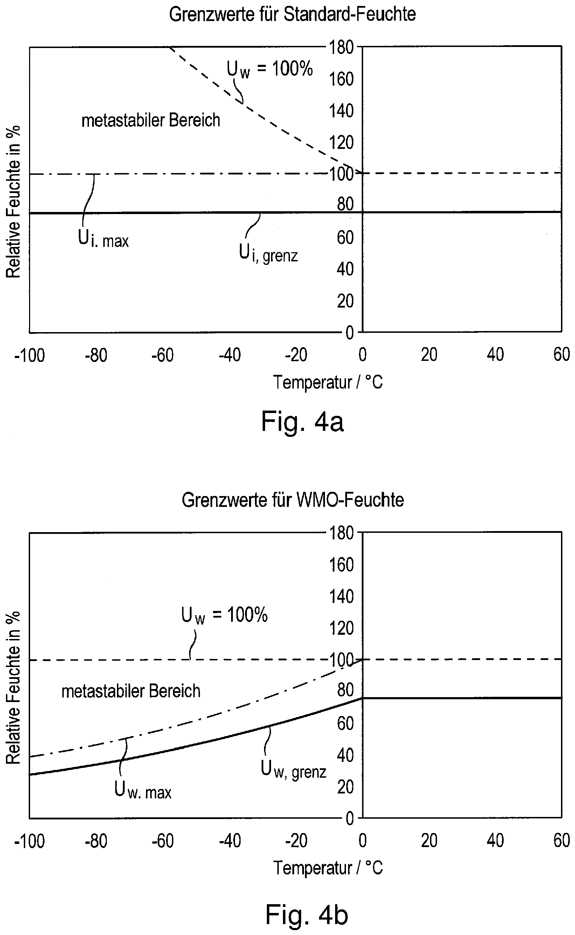

Bevor anhand der Figur 3, 4a und 4b das erfindungsgemäße Verfahren im Detail erläutert wird, sei zunächst mit Hilfe der Figuren 1 und 2 das primäre Einsatzgebiet der vorliegenden Erfindung und der grundsätzliche Aufbau einer Radiosonde mit der erfindungsgemäßen Sensoranordnung veranschaulicht.

In Figur 1 ist stark schematisiert eine Radiosonde dargestellt, die aus einem mit Helium oder Wasserstoff gefüllten Ballon 10 und einer daran aufgehängten Elektronikeinheit 20 mit einer Sensorikeinheit 30 besteht. Die Elektronikeinheit 20 umfasst hierbei diverse, nicht im Einzelnen gezeigte Komponenten. Hierzu gehört u.a. eine GPS-Einheit zur Positionsbestimmung, ein Sende-Modul zur Datenübertragung an eine Bodenstation, Batterien zur Energieversorgung sowie eine Steuereinheit. Die Steuereinheit kann hierbei eine Verarbeitung der über die Sensoranordnung ermittelten Daten vor der Übertragung an eine Bodenstation übernehmen, außerdem erfolgt über die Steuereinheit das nachfolgend noch im Detail zu beschreibende Heizen von Teilen einer Sensoranordnung, die Bestandteil der Sensorikeinheit 30 ist.

Die Sensorikeinheit 30 ist in Figur 2 in einer vergrößerten Darstellung ebenfalls schematisiert gezeigt. Wie aus der Figur ersichtlich, umfasst die Sensorikeinheit 30 mehrere auf einem Träger 31 angeordnete Mess-Komponenten, nämlich einen Gastemperatur-Sensor 32 zur Messung der Umgebungs-Lufttemperatur $t_{gas}$ sowie eine Sensoranordnung 33 zur Messung der Umgebungs-Feuchte. Nicht in Figur 2 gezeigt sind die einzelnen Komponenten der Sensoranordnung 33. Im wesentlichen weist die Sensoranordnung 33 einen Feuchtesensor, einen Temperatursensor zur Messung der Sensoranordnungs-Temperatur sowie ein Heizelement auf, über das der Feuchtesensor zur Vermeidung von Vereisung zumindest zeitweise beheizt wird. Die Komponenten der Sensoranordnung 33 sind üblicherweise auf einem geeigneten Sensor-Substrat angeordnet. Bezüglich weiterer Details der Sensoranordnung 33 sei auf die noch folgende Beschreibung von Ausführungsbeispielen im Anschluss an die Erläuterung des erfindungsgemäßen Verfahrens verwiesen.

Nachfolgend wird mit Hilfe der Figuren 3, 4a und 4b das erfindungsgemäße Verfahren beschrieben. Zuvor seien einige Zusammenhänge in Verbindung mit verschiedenen Definitionen der relativen Feuchte erläutert.

So wird in der Thermodynamik die relative Feuchte $U_w$ eines Gases üblicherweise als Verhältnis des aktuellen Wasserdampfpartialdrucks e in einem Gas zum Wasserdampfpartialdruck bei Sättigung (Sättigungswasserdampfpartialdruck) $e_w(t)$ bei der Gastemperatur t definiert, ausgedrückt in %:

$$U_w = \frac{e}{e_w(t)} \cdot 100 \qquad \% \qquad \text{(Gl. 1)}$$

mit:

$U_w$ := relative Feuchte über Wasser
e := aktueller Wasserdampfpartialdruck
$e_w(t)$ := Sättigungswasserdampfpartialdruck über Wasser bei Temperatur t

Im Temperaturbereich mit Temperaturen t > 0 °C existiert hierbei nur eine einzige Definition der relativen Feuchte $U_w$ gemäß der vorstehenden Gleichung 1, da es nur einen einzigen Sättigungszustand bzw. Sättigungswasserdampfpartialdruck $e_w(t)$ bei Sättigung über Wasser gibt.

Anders verhält es sich im Temperaturbereich mit negativen Temperaturen t < 0°C, also in demjenigen Temperaturbereich, in dem die eingangs diskutierten Vereisungsprobleme bei Radiosonden auftreten können. Hier existieren aufgrund der unterschiedlichen Wasserdampfpartialdrücke bei Sättigung über Wasser, ew(t), und bei Sättigung über Eis, ei(t), auch zwei unterschiedliche Definitionen für die relative Feuchte.

Zum einen gibt es die sog. "WMO-Definition" (WMO: World Metrological Organization) der relativen Feuchte, die insbesondere bei thermodynamischen Betrachtungen von Interesse ist. Diese ergibt sich gemäß nachfolgender Beziehung und ist identisch mit vorstehender Gleichung 1:

$$U_w = \frac{e}{e_w(t)} \cdot 100 \qquad \%$$

mit:

$U_w$ := relative Feuchte über Wasser nach WMO-Definition
e := aktueller Wasserdampfpartialdruck
$e_w(t)$ := Sättigungswasserdampfpartialdruck über Wasser bei Temperatur t

Die WMO-Definition der relativen Feuchte gilt somit im gesamten Temperaturbereich, d.h. sowohl bei positiven als auch bei negativen Temperaturen t. Verwendet wird die WMO-Definition der relativen Feuchte primär in der Meteorologie.

Neben dieser Definition der relativen Feuchte existiert bei negativen Temperaturen t < 0°C noch die sog. "Standard-Definition" der relativen Feuchte, mitunter auch "Technische Definition" der relativen Feuchte genannt. Während im Temperaturbereich t > 0°C wie oben erwähnt die Standard-Definition der relativen Feuchte identisch mit der WMO-Definition der relativen Feuchte ist, ergibt sich die relative Feuchte nach der Standard-Definition im negativen Temperaturbereich t < 0°C gemäß

$$U_i = \frac{e}{e_i(t)} \cdot 100 \qquad \% \qquad \text{(Gl. 2)}$$

mit:

$U_i$ := relative Feuchte über Eis nach Standard-Definition   e := aktueller Wasserdampfpartialdruck
$e_i(t)$ := Sättigungswasserdampfpartialdruck über Eis bei Temperatur t

Im Temperaturbereich t < 0°C gilt somit auch:

$$U_i = U_w \cdot \frac{e_w(t)}{e_i(t)} \qquad \text{(Gl. 3)}$$

mit:

$U_i$ := relative Feuchte über Eis nach Standard-Definition
$U_w$ := relative Feuchte über Wasser nach WMO-Definition
$e_w(t)$ := Sättigungswasserdampfpartialdruck über Wasser bei Temperatur t
$e_i(t)$ := Sättigungswasserdampfpartialdruck über Eis bei Temperatur t

Hintergrund der beiden unterschiedlichen Definitionen für die relative Feuchte ist, dass in technischen Umgebungen der Sättigungszustand über Eis nie überschritten wird. Die Eissättigung stellt hier den maximalen Wert dar, so dass sich die relative Feuchte gemäß Standard-Definition normalerweise im Bereich von 0 - 100% ergibt.

Wenn man nun in technischen Umgebungen unter Verwendung der Eissättigung als größtmöglichen Wert die relative Feuchte gemäß WMO-Definition misst, so gibt es bei negativen Temperaturen t < 0°C eine maximale relative Feuchte $U_{w.max}$, die sich aus dem Verhältnis der Sättigungswasserdampfpartialdrücke über Eis und Wasser folgendermaßen ergibt:

$$U_{w.max} = \frac{e_i(t)}{e_w(t)} \cdot 100 \quad \% \qquad \text{(Gl. 4)}$$

mit:

$U_{w.max}$ := maximale relative Feuchte nach WMO-Definition bei Vereisung
$e_i(t)$ := Sättigungswasserdampfpartialdruck über Eis bei Temperatur t
$e_w(t)$ := Sättigungswasserdampfpartialdruck über Wasser bei Temperatur t

In der nachfolgenden Tabelle ist die nach der WMO-Definition bestimmte maximale relative Feuchte $U_{w.max}$ bei Vereisung für einige negative Temperaturen t < 0°C beispielhaft zusammengestellt:

| $t$ [°C] | 0 | -10 | -20 | -30 | -40 | -50 | -60 | -70 | -80 |
|---|---|---|---|---|---|---|---|---|---|
| $e_w(t)$ [hPa] | 6.1357 | 2.8766 | 1.2611 | 0.5126 | 0.1912 | 0.0647 | 0.0196 | 0.0052 | 0.0012 |
| $e_i(t)$ [hPa] | 6.1356 | 2.6094 | 1.0368 | 0.3817 | 0.1290 | 0.0396 | 0.0109 | 0.0026 | 0.0005 |
| $U_{w.max}$ [%] | 100.00 | 90.71 | 82.21 | 74.47 | 67.46 | 61.14 | 55.48 | 50.44 | 45.98 |

Wie aus dieser Tabelle ersichtlich, wird in technischen Systemen damit etwa bei einer Temperatur t = -40°C eine maximale relative Feuchte $U_{w.max}$ = 67,46% nach WMO-Definition ermittelt; die relative Feuchte $U_i$ gemäß Standard-Definition hingegen beträgt $U_i$ = 100%.

Desweiteren ist aus dieser Tabelle ersichtlich, dass bei negativen Temperaturen t unterhalb von etwa -30°C eine maximale relative Feuchte $U_{w.max}$ nach WMO-Definition von etwa 75% nicht mehr überschritten wird. Im Fall der zeitweisen Heizung des Feuchtesensors in einer Sensoranordnung gemäß der oben diskutierten EP 0 801 302 A1 hat dies zur Folge, dass der zum Einsetzen des Heizbetriebs vorgesehene Feuchte-Grenzwert von 75% nicht erreicht wird und deshalb eine Vereisung der Sensoranordnung mit den entsprechenden unerwünschten Folgen resultiert.

Dieser Zusammenhang ist für ein Heizverfahren gemäß der EP 0 801 302 A1 auch aus dem Diagramm in Figur 3 ersichtlich. In diesem Diagramm sind verschiedene Feuchte-Grenzwerte gemäß WMO-Definition in Abhängigkeit der Temperatur t dargestellt. So repräsentiert die durchgezogene Kurve den Feuchte-Grenzwert $U_{w,grenz}$, ab dem die Heizung des Feuchtesensors erfolgt. Die strichpunktierte Kurve veranschaulicht den Feuchte-Grenzwert $U_{w.max}$, ab dem unterhalb von 0°C Vereisung auftritt. Die strichlinierte Kurve zeigt den Feuchte-Grenzwert $U_w$ = 100% für den thermodynamisch maximalen Wassergehalt, welcher hier im gesamten Temperaturbereich bei 100% liegt. Unterhalb einer Temperatur t, die durch den Schnittpunkt der Kurve mit dem Feuchte-Grenzwert $U_{w,grenz}$ für die Heizungsregelung und der Kurve mit dem Feuchte-Grenzwert $U_{w.max}$ für das Auftreten von Vereisung gegeben ist und etwa bei -30°C liegt, kann somit der Feuchte-Grenzwert von 75% zum Einsetzen der Heizung nicht mehr erreicht werden, wenn der Feuchte-Grenzwert auf Grundlage der WMO-Definition festgelegt ist; eine vorzeitige Vereisung der Sensoranordnung ist die Folge.

Erfindungsgemäß ist daher vorgesehen, den Feuchte-Grenzwert im Temperaturbereich unterhalb von 0°C, ab dem der Feuchtesensor zumindest zeitweise über ein Heizelement beheizt wird, nicht nach der WMO-Definition zu wählen, sondern auf Grundlage der oben diskutierten Standard-Definition der relativen Feuchte gemäß den Gleichungen 2 und 3. Dies bedeutet, dass der Feuchte-Grenzwert $U_{i,grenz}$ für den Heizbetrieb damit erfindungsgemäß als Grenzfeuchte bezüglich Sättigung über Eis gewählt bzw. festgelegt wird.

Der entsprechende Feuchte-Grenzwert wird im Temperaturbereich unterhalb von 0°C dabei als konstanter Feuchte-Grenzwert $U_{i,grenz}$ vorzugsweise in einem Bereich 60% ≤ $U_{i,grenz}$ ≤ und 90% gewählt; geeignet ist etwa ein Feuchte-Grenzwert $U_{i,\,grenz}$ = 75%.

Im Temperaturbereich oberhalb von 0°C ist analog zum Vorgehen gemäß der EP 0 801 302 A1 vorgesehen, ab einem vorgegebenen Feuchte-Grenzwert $U_{w,grenz}$ den Feuchtesensor über ein Heizelement zumindest zeitweise zu beheizen, wobei der Feuchte-Grenzwert als Grenzfeuchte bezüglich Sättigung über Wasser gewählt ist, d.h. gemäß der in diesem Temperaturbereich identischen relativen Feuchte gemäß WMO- und Standard-Definition.

Die entsprechenden Zusammenhänge beim erfindungsgemäßen Verfahren sind in den Diagrammen der Figuren 4a und 4b dargestellt, die wiederum die verschiedenen Feuchte-Grenzwerte auf Grundlage der relativen Feuchte gemäß Standard-Definition (Figur 4a) bzw. WMO-Definition (Figur 4b) im Temperaturbereich zwischen -100°C und +60°C zeigen.

Wie aus Figur 4a ersichtlich, wird ein Feuchte-Grenzwert $U_{i,grenz}$ im Temperaturbereich unterhalb von 0°C nunmehr gemäß der Standard-Definition der relativen Feuchte mit $U_{i,grenz}$ = 75% gewählt, also als konstante Grenzfeuchte bezüglich der Sättigung über Eis. Ab dem Erreichen dieses Feuchte-Grenzwerts $U_{i,grenz}$ = 75% wird der Feuchtesensor über das Heizelement zumindest zeitweise beheizt, bezüglich geeigneter Heizverfahren sei auf die nachfolgende Beschreibung verwiesen. Damit ist wie aus Figur 4a ersichtlich sichergestellt, dass auch bei sehr tiefen Temperaturen t im Unterschied zum Stand der Technik auf jeden Fall vor dem Erreichen des Feuchte-Grenzwertes $U_{i.max}$ ab dem Vereisung eintritt, der Feuchtesensor beheizt wird und damit eine Vereisung desselbigen zuverlässig verhindert werden kann.

In Figur 4b sind zum Vergleich die identischen Feuchte-Grenzwerte $U_{w.max}$, $U_{w,grenz}$ sowie $U_w$ = 100% im entsprechenden Temperaturbereich dargestellt, nunmehr jedoch jeweils auf Grundlage der WMO-Feuchtedefinition, also analog zur Darstellung der Figur 3. Während die Verhältnisse oberhalb von 0°C dabei identisch zum Stand der Technik sind, verläuft der erfindungsgemäß auf Grundlage der Standard-Definition gewählte Feuchte-Grenzwert $U_{w,grenz}$ bzw. im negativen Temperaturbereich t < 0°C im Diagramm immer unterhalb des Feuchte-Grenzwerts $U_{w.max}$ für die Vereisung. Dies bedeutet, dass sichergestellt ist, dass vor dem Eintreten von Vereisung das Beheizen des Feuchtesensors einsetzt und über ein geeignetes Gegenheizen eine Vereisung desselbigen zuverlässig verhindert werden kann. Bei einem gewählten Feuchte-Grenzwert $U_{i,grenz}$ = 75% gemäß der Standard-Definition ergibt sich die hierzu korrespondierende relative Feuchte gemäß WMO-Definition dann folgendermaßen:

$$U_w = U_{i,grenz} \cdot \frac{e_i(t)}{e_w(t)} = 75 \cdot \frac{e_i(t)}{e_w(t)} \quad \text{(Gl. 5)}$$

mit:

$U_w$ := relative Feuchte über Wasser nach WMO-Definition
$U_{i,grenz}$ = Feuchte-Grenzwert für Heizung gemäß Standard-Definition
$e_i(t)$ := Sättigungswasserdampfpartialdruck über Eis bei Temperatur t
$e_w(t)$ := Sättigungswasserdampfpartialdruck über Wasser bei Temperatur t

Es liegt somit ein Feuchte-Grenzwert $U_{i,grenz}$ für das Beheizen des Feuchtesensors vor, der gemäß Standard-Definition konstant und gemäß $U_{i,grenz}$ = 75% gewählt ist, welcher in der Feuchte-Definition nach WMO aber im negativen Temperaturbereich t < 0°C in Abhängigkeit von der Temperatur t variiert, wie dies in Figur 4b links unten ersichtlich ist.

Auf dieser Art und Weise ist gewährleistet, dass der Feuchtesensor praktisch nie eine höhere relative Feuchte als 75% gemäß Standard-Definition misst; eine ab 100% relativer Feuchte gemäß Standard-Definition auftretende Vereisung kann damit zuverlässig verhindert werden.

An dieser Stelle sei darauf hingewiesen, dass die Feuchtemessung über den Feuchtesensor der erfindungsgemäßen Sensoranordnung grundsätzlich nach wie vor gemäß der WMO-Definition der relativen Feuchte erfolgt; lediglich für die Beheizung des Feuchtesensors wird erfindungsgemäß ein Feuchte-Grenzwert $U_{i,grenz}$ auf Grundlage der Standard-Definition herangezogen.

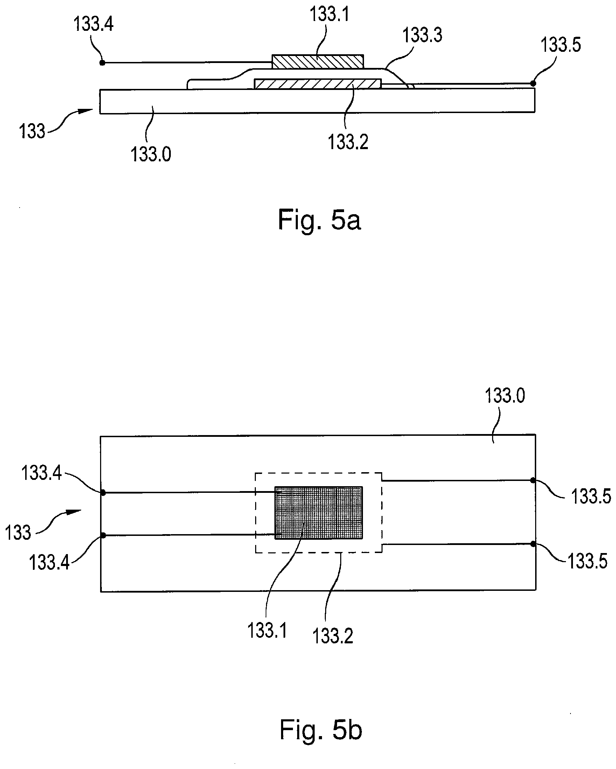

Bevor abschließend verschiedene Ausführungsbeispiele erfindungsgemäßer Sensoranordnungen anhand der Figuren 5 - 9 beschrieben werden, seien nachfolgend noch geeignete Möglichkeiten zum Beheizen der Sensoranordnung erläutert.

Eine erste Variante eines geeigneten Heizverfahrens unter Zuhilfenahme des erfindungsgemäß gewählten Feuchte-Grenzwerts $U_{i,grenz}$ sei dabei als statisches Heizverfahren bezeichnet. Hierbei wird vorgesehen, dass der Feuchtesensor über das Heizelement beim Überschreiten eines ersten Feuchte-Grenzwerts $U_{i,grenz\_1}$ mit einer konstanten Heizleistung beheizt wird und beim Unterschreiten eines weiteren, zweiten Feuchte-Grenzwerts $U_{i,grenz\_2}$ die Heizung wieder abgeschaltet wird. Die beiden Feuchte-Grenzwerte $U_{i,grenz\_1}$, $U_{i,grenz\_2}$ werden wie vorstehend erläutert auf Grundlage der Standard-Definition der relativen Feuchte bestimmt, d.h. als Grenzfeuchten bezüglich Sättigung über Eis. In einer möglichen Ausführungsform dieses Heizverfahrens werden die beiden Feuchte-Grenzwerte $U_{i,grenz\_1}$, $U_{i,grenz\_2}$, zwischen denen der Feuchtesensor mit einer konstanten Heizleistung beheizt wird, in den folgenden Bereichen gewählt:

$$85\% \leq U_{i,grenz\_1} \leq 95\%$$

$$65\% \leq U_{i,grenz\_2} \leq 75\%$$

Eine zweite Variante eines geeigneten Heizverfahrens unter Zuhilfenahme des erfindungsgemäß gewählten Feuchte-Grenzwerts $U_{i,grenz}$ sei als dynamisches Heizverfahren bezeichnet. Bei diesem Heizverfahren wird ab dem Erreichen des Feuchte-Grenzwerts $U_{i,grenz}$ der Feuchtesensor über das Heizelement geregelt beheizt und dabei die lokale Temperatur des Feuchtesensors so geregelt, dass sich eine gleichbleibende bzw. konstante relative Feuchte am Feuchtesensor ergibt. Vorzugsweise wird dabei auf eine konstante relative Feuchte in Höhe des Feuchte-Grenzwerts $U_{i,grenz}$ geregelt. Anhand der Figuren 5a, 5b, 6a, 6b, 7a, 7b werden nachfolgend nunmehr drei Ausführungsbeispiele von Sensoranordnungen erläutert, die für das erfindungsgemäße Verfahren genutzt werden können. Die Figuren zeigen jeweils eine Schnittansicht sowie eine Draufsicht auf einen Teil der jeweiligen Sensoranordnung; nicht in diesen Figuren dargestellt ist die elektronische Steuereinheit.

Die erfindungsgemäße Sensoranordnung umfasst jeweils einen Feuchtesensor, einen Temperatursensor sowie ein Heizelement. Mit Hilfe des Temperatursensors wird dabei die lokale Temperatur der Sensoranordnung bestimmt, das Heizelement dient zum zumindest zeitweisen Beheizen des Feuchtesensors.

Als Feuchtesensor kommt für die erfindungsgemäße Sensoranordnung bevorzugt ein kapazitiver Feuchtesensor in Betracht, der in Dünnschichttechnik auf einem Sensor-Substrat angeordnet ist. Der Feuchtesensor umfasst ein feuchteempfindliches Material, dessen Kapazität sich feuchteabhängig in definierter Art und Weise verändert und welches als Dielektrikum zwischen den beiden Elektroden eines Plattenkondensators angeordnet ist. Eine der beiden Elektroden ist hierbei feuchtedurchlässig ausgebildet. Besonders geeignet als feuchteempfindliches Material sind insbesondere Polymere, beispielsweise Polyimid.

Für das Sensor-Substrat wird in der Sensoranordnung bevorzugt ein Isolator verwendet, der elektrisch nicht leitfähig ist, aber definierte thermische Eigenschaften aufweist. In Betracht kommen hierfür etwa Glas, Keramikmaterialien wie z.B. $Al_2O_3$, AlN oder $Be_2O_3$. Ebenfalls verwendbar ist auf Grund seiner thermischen Eigenschaften auch Silizium als Substratmaterial. In diesem Fall muss allerdings vor dem Prozessieren des Sensors eine elektrische Isolationsschicht aufgebracht werden.

Auf das jeweilige Sensor-Substrat werden die zum Aufbau der verschiedenen Komponenten der Sensoranordnung erforderlichen Schichten bzw. Materialien schrittweise aufgebracht und strukturiert. Die entsprechenden Schichten sind dabei in der Regel passiv ausgebildet und besitzen z.B. als Isolatoren definierte dielektrische Eigenschaften (feuchteempfindliches Material) oder aber definierte ohmsche Eigenschaften bzw. Löteigenschaften (Metallschichten) etc..

In den nachfolgend zu erläuternden drei Ausführungsbeispielen einer erfindungsgemäßen Sensoranordnung ist jeweils ein derartiger Grundaufbau des Feuchtesensors vorgesehen. Es sei an dieser Stelle jedoch darauf hingewiesen, dass grundsätzlich auch andere Varianten von Feuchtesensoren im Rahmen der vorliegenden Erfindung verwendbar sind; weitere Ausführungsmöglichkeiten werden am Ende der Beschreibung noch skizziert.

Die verschiedenen Ausführungsbeispiele erfindungsgemäßer Sensoranordnungen unterscheiden sich i.w. in der Ausbildung und/oder Anordnung des Temperatursensors und des Heizelements auf dem Sensor-Substrat mit dem kapazitiven Feuchtesensor.

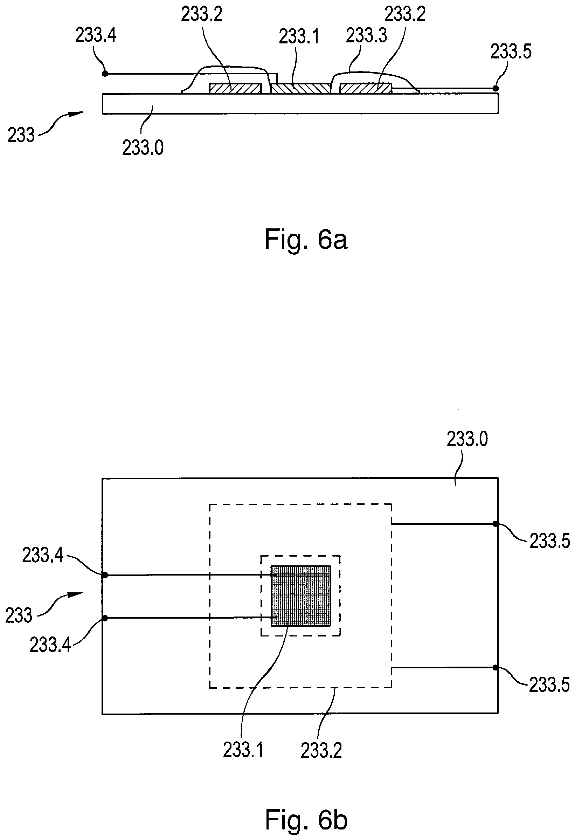

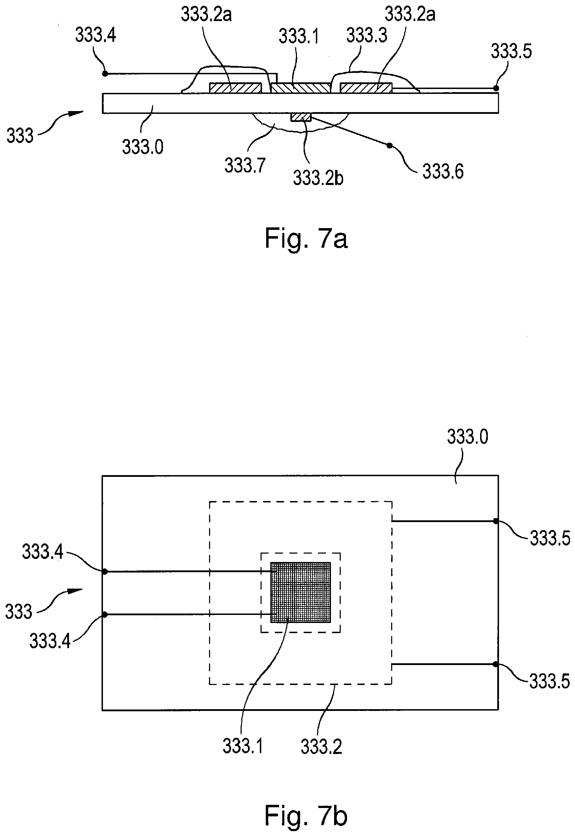

So ist bei den beiden Sensoranordnungs-Varianten in den Figuren 5a, 5b bzw. 6a, 6b jeweils vorgesehen, den Temperatursensor gleichzeitig als Heizelement zu nutzen, während in der Variante gemäß den Figuren 7a, 7b der Temperatursensor und das Heizelement als separate Komponenten auf dem Sensor-Substrat vorgesehen sind. Allen nachfolgend beschriebenen Sensoranordnungs-Varianten ist wiederum gemeinsam, dass der Temperatursensor und das Heizelement jeweils ebenfalls in Dünnschichttechnik ausgeführt sind und aus einem Material mit einer definierten temperaturabhängigen Widerstandscharakteristik bestehen.

Im Ausführungsbeispiel der Sensoranordnung 133 gemäß den Figuren 5a, 5b sind der Feuchtesensor 133.1 sowie die kombinierte Einheit 133.2 aus Temperatursensor und Heizelement auf der gleichen Seite des Sensor-Substrats 133.0 angeordnet. Konkret ist hierbei vorgesehen, dass der Feuchtesensor 133.1, getrennt durch eine elektrisch isolierende Isolationsschicht 133.3, oberhalb der kombinierten Einheit 133.2 aus Temperatursensor und Heizelement angeordnet ist. Über die Kontaktierungsanschlüsse 133.4 wird der Feuchtesensor 133.1 und über die Kontaktierungsanschlüsse 133.5 die kombinierte Einheit 133.2 aus Temperatursensor und Heizelement elektrisch kontaktiert und jeweils mit der - nicht in dieser Figur dargestellten - Steuereinheit verbunden.

Anstelle der Übereinander-Anordnung ist im Ausführungsbeispiel der Sensoranordnung 233 gemäß den Figuren 6a, 6b vorgesehen, dass der Feuchtesensor 233.1 zentral bzw. mittig auf dem Sensor-Substrat 233.0 angeordnet wird, während die kombinierte Einheit 233.2 aus Temperatursensor und Heizelement ebenfalls auf dem Sensor-Substrat um den Feuchtesensor 233.1 herum angeordnet ist. Über der kombinierten Einheit 233.2 aus Temperatursensor und Heizelement ist eine elektrisch isolierende Isolationsschicht 233.3 vorgesehen, der Feuchtesensor 233.1 bzw. dessen feuchtedurchlässige Deckelektrode ist davon nicht bedeckt. Mit dem Bezugszeichen 233.4 werden die Kontaktierungsanschlüsse des Feuchtesensors 233.1 und mit dem Bezugszeichen 233.5 diejenigen der kombinierten Einheit 233.2 aus Temperatursensor und Heizelement, über die diese Komponenten wiederum mit der - nicht in dieser Figur dargestellten - Steuereinheit verbunden sind.

In diesen beiden Ausführungsbeispielen wird in der kombinierten Einheit 133.2, 233.2 aus Temperatursensor und Heizelement jeweils der Temperatursensor, der zur Messung der lokalen Temperatur der Sensoranordnung 133, 233 dient, gleichzeitig zum Heizen des Feuchtesensors 133.1, 233.1 genutzt. Hierzu wird je nach erforderlicher Heizleistung und genutztem Heizverfahren der durch den Temperatursensor fließende Messstrom gezielt variiert bzw. erhöht. Die daraus resultierende Eigenerwärmung des Temperatursensors dient dann zum gezielten Heizen des Feuchtesensors 133.1, 233.2, um eine Vereisung zu verhindern.

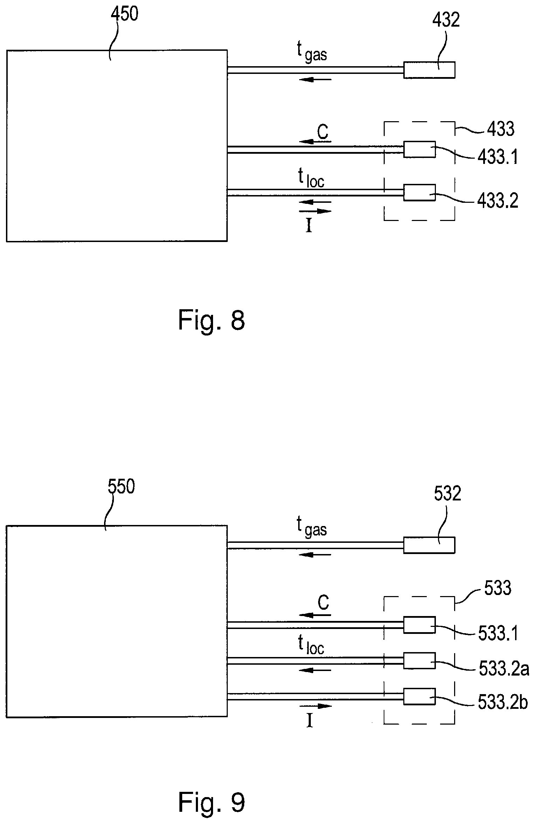

Derart aufgebaute Sensoranordnungen 433 können gemäß Figur 8 mit einer nachgeordneten Steuereinheit 450 in der Radiosonde verbunden sein. Zur Steuereinheit 450 übertragen werden hier die Messwerte C des Feuchtesensors 433.1. Die kombinierte Einheit 433.2 aus Temperatursensor und Heizelement überträgt die Messwerte $t_{loc}$ bzgl. der lokalen Temperatur der Sensoranordnung 433 an die Steuereinheit, die Steuereinheit wirkt über den Messstrom I zum ggf. erforderlichen Heizen auf die kombinierte Einheit 433.2 aus Temperatursensor und Heizelement ein. Hierbei können die beiden oben erläuterten Heiz-Verfahren (statisch, dynamisch) zum Einsatz kommen. Im Fall eines statischen Heizverfahrens wird dabei durch Schalten des Messstroms I zwischen unterschiedlich großen Messströmen die Heizung ein und ausgeschaltet. Bei Nutzung eines dynamischen Heizverfahrens wird durch die definierte Variation des Messstroms I die Heizleistung und damit über die Temperatur $t_{loc}$ die lokale Sensorfeuchte geregelt.

Zusätzlich noch dargestellt ist in Figur 8 im übrigen noch der Gastemperatur-Sensor 432 der Sensorik-Einheit der Radiosonde, der zur Messung der Umgebungs-Lufttemperatur $t_{gas}$ dient, aber für die vorliegende Erfindung nicht weiter von Bedeutung ist.

Ein drittes Ausführungsbeispiel einer Sensoranordnung 333 ist in den Figuren 7a und 7b gezeigt. Hier sind nunmehr der Temperatursensor 333.2b und das Heizelement 333.2a als separate Komponenten auf dem Sensor-Substrat 333.0 angeordnet, nämlich auf unterschiedlichen Seiten desselbigen. Auf der Oberseite des Sensor-Substrats 333.0 ist benachbart zum zentral angeordneten Feuchtesensor 333.1 das Heizelement 333.2a angeordnet. Das Heizelement 333.2a ist wiederum mit einer Isolationsschicht 333.3 bedeckt, der Bereich des kapazitiven Feuchtesensors 333.1, insbesondere dessen feuchtdurchlässige Deckelektrode, hingegen bleibt frei zugänglich. Auf der Unterseite des Sensor-Substrats 333.0 ist zentral der Temperatursensor 333.2b angeordnet. Der Temperatursensor 333.2b ist hier als NTC-Element (Negative Temperature Coefficient Thermistor) ausgebildet, das mittels Wärmeleitkleber 333.7 auf der Unterseite des Sensor-Substrats 333.0 befestigt ist. Neben den Kontaktierungsanschlüssen 333.4 für den Feuchtesensor 333.1 sind in diesem Ausführungsbeispiel ferner noch separate Kontaktierungsanschlüsse 333.5, 333.6 für das Heizelement 333.2a sowie für den Temperatursensor 333.2b vorgesehen. Über diese Kontaktierungsanschlüsse 333.4, 333.5, 333.5 erfolgt wiederum die Verbindung der verschiedenen Komponenten mit der nachgeordneten - nicht in den Figuren 7a, 7b dargestellten - Steuereinheit.

Derart aufgebaute Sensoranordnungen 533 können gemäß Figur 9 mit einer nachgeordneten Steuereinheit 550 in der Radiosonde verbunden sein. Zur Steuereinheit 550 übertragen werden auch hier die Messwerte C des Feuchtesensors 533.1. Desweiteren ist eine Übertragung der Messwerte $t_{loc}$ des Temperastursensors 533.2a bzgl. der lokalen Temperatur der Sensoranordnung 433 an die Steuereinheit 550 vorgesehen. Ferner wirkt die Steuereinheit 550 über den Heizstrom I zum ggf. erforderlichen Heizen auf das Heizelement 533.2b ein. Auch hier können wieder die beiden oben erläuterten Heiz-Verfahren (statisch, dynamisch) zum Einsatz kommen. Bei Nutzung eines statischen Heizverfahrens wird dabei durch Schalten des Heizstroms I zwischen unterschiedlich großen Heizströmen die Heizung ein- und ausgeschaltet. Bei Nutzung eines dynamischen Heizverfahrens wird durch die definierte Variation des Heizstroms I die Heizleistung und damit über die Temperatur $t_{loc}$ die lokale Sensorfeuchte geregelt.

Ebenfalls noch zusätzlich dargestellt ist in auch Figur 9 der Gastemperatur-Sensor 532 der Sensorik-Einheit der Radiosonde, der zur Messung der Umgebungs-Lufttemperatur $t_{gas}$ dient, aber für die vorliegende Erfindung nicht weiter von Bedeutung ist.

Neben den vorstehend beschriebenen Ausführungsbeispielen existieren im Rahmen der vorliegenden Erfindung selbstverständlich noch weitere Ausgestaltungsmöglichkeiten.

So ist es etwa möglich, auch andere Varianten kapazitiver Feuchtesensoren einzusetzen. Anstelle von Plattenkondensator-Aufbauten können auch sog. Streufeldkondensatoren mit Interdigitalstruktur oder Mesa-Strukturen verwendet werden. Ebenfalls denkbar wäre er Einsatz resistiver Feuchtesensoren.

Wird wie oben erwähnt, Silizium als Material für das Sensor-Substrat verwendet, können der Temperatursensor und das Heizelement dann auch in Halbleitertechnologie in Silizium ausgeführt werden, der Feuchtesensor wird dann in Dünnschichttechnologie auf das Sensor-Substrat prozessiert. In diesem Fall bietet sich darüber hinaus noch an, Schaltungen zur Signalverarbeitung und/oder der Steuereinheit in das Sensor-Substrat zu integrieren.

Desweiteren wäre es möglich, die Elemente der Sensoranordnung auf einer dünnen Membran als Sensor-Substrat anzuordnen, womit eine Verringerung der erforderlichen Heizleistung und damit wesentlich kürzere Zeitkonstanten bei der Messung realisierbar wären.

Ferner könnte auch vorgesehen werden, die in den Figuren 7a, 7b gezeigte Ausführungsform dahingehend abzuwandeln, dass ein Temperatursensor auf die Unterseite des Sensor-Substrats prozessiert wird usw..

## Patentansprüche

1. Verfahren zum Betrieb einer Sensoranordnung, insbesondere zur Bestimmung der relativen Feuchte über Wasser ($U_W$) in Radiosonden, wobei die Sensoranordnung einen Feuchtesensor (133.1; 233.1; 333.1; 433.1; 533.1), einen Temperatursensor (133.2; 233.2; 333.2a; 433.2; 533.2a) sowie ein Heizelement (133.2; 233.2; 333.2a; 433.2; 533.2a) umfasst und der Feuchtesensor (133.1; 233.1; 333.1; 433.1; 533.1) zumindest zeitweise beheizt wird,
**dadurch gekennzeichnet,**
**dass** der Feuchtesensor (133.1; 233.1; 333.1; 433.1; 533.1) im Temperaturbereich unterhalb von 0°C über das Heizelement (133.2; 233.2; 333.2a; 433.2; 533.2a) zumindest zeitweise beheizt wird, wenn die aus der vom Feuchtesensor (133.1; 233.1; 333.1; 433.1; 533.1) gemessenen relativen Feuchte über Wasser ($U_W$) berechnete relative Feuchte über Eis ($U_i$) einen konstanten, temperaturunabhängigen Feuchte-Grenzwert ($U_{i,grenz}$) überschreitet, wobei der Feuchte-Grenzwert ($U_{i,grenz}$) als Grenzfeuchte bezüglich Sättigung über Eis gewählt wird.

2. Verfahren nach Anspruch 1, **dadurch gekennzeichnet, dass** der Feuchte-Grenzwert ($U_{i,grenz}$) im Temperaturbereich unterhalb von 0°C aus der Standard-Definition der relativen Feuchte über Eis ($U_i$) als konstanter Feuchte-Grenzwert ($U_{i,grenz}$) gewählt wird, wobei sich die relative Feuchte über Eis ($U_i$) gemäß

$$U_i = \frac{e}{e_i(t)} \cdot 100 = U_W \cdot \frac{e_w(t)}{e_i(t)}$$

ergibt, mit:

$U_I$ := relative Feuchte über Eis nach Standard-Definition

e := tatsächlicher Wasserdampfpartialdruck
$e_i(t)$ := Wasserdampfpartialdruck bei Sättigung über einer Eisfläche
$U_w$ := relative Feuchte über Wasser nach WMO-Definition
$e_w(t)$ := Wasserdampfpartialdruck bei Sättigung über einer Wasserfläche

3. Verfahren nach Anspruch 1, **dadurch gekennzeichnet, dass** der Feuchte-Grenzwert ($U_{i,grenz}$) im Bereich 60% ≤ $U_{i,grenz}$ ≤ 90% gewählt wird.

4. Verfahren nach Anspruch 3, **dadurch gekennzeichnet, dass** der Feuchte-Grenzwert ($U_{i,grenz}$) gemäß $U_{i,grenz}$ = 75% gewählt wird.

5. Verfahren nach mindestens einem der Ansprüche 1 - 4, **dadurch gekennzeichnet, dass** der Feuchtesensor (133.1; 233.1; 333.1; 433.1; 533.1) über das Heizelement (133.2; 233.2; 333.2a; 433.2; 533.2a) mit einer konstanten Heizleistung beheizt wird, wenn die aus der vom Feuchtesensor (133.1; 233.1; 333.1; 433.1; 533.1) gemessenen relativen Feuchte über Wasser ($U_W$) berechnete relative Feuchte über Eis ($U_i$) einen ersten konstanten, temperaturunabhängigen Feuchte-Grenzwert ($U_{i,grenz\_1}$) überschreitet, und die Heizung wieder abgeschaltet wird, wenn die aus der vom Feuchtesensor (133.1; 233.1; 333.1; 433.1; 533.1) gemessenen relativen Feuchte über Wasser ($U_w$) berechnete relative Feuchte über Eis ($U_i$) einen zweiten konstanten, temperaturunabhängigen Feuchte-Grenzwert ($U_{i,grenz\_2}$) unterschreitet, wobei die Feuchte-Grenzwerte ($U_{i,grenz\_1}$, $U_{i,grenz\_2}$) jeweils als Grenzfeuchten bezüglich Sättigung über Eis gewählt sind.

6. Verfahren nach Anspruch 5, **dadurch gekennzeichnet, dass** der erste Feuchte-Grenzwert ($U_{i,grenz\_1}$) im Bereich 85% ≤ $U_{i,grenz\_1}$ ≤ 95% und der zweite Feuchte-Grenzwert ($U_{i,grenz\_2}$) im Bereich 65% ≤ $U_{i,grenz\_2}$ ≤ 75% gewählt wird.

7. Verfahren nach mindestens einem der Ansprüche 1 - 4, **dadurch gekennzeichnet, dass** der Feuchtesensor (133.1; 233.1, 333.1; 433.1; 533.1), wenn die aus der vom Feuchtesensor (133.1; 233.1; 333.1; 433.1; 533.1) gemessenen relativen Feuchte über Wasser ($U_w$) berechnete relative Feuchte über Eis ($U_i$) einen konstanten, temperaturunabhängigen Feuchte-Grenzwert ($U_{i,grenz}$) überschreitet, über das Heizelement (133.2; 233.2; 333.2a; 433.2; 533.2a) derart geregelt beheizt wird, dass eine konstante relative Feuchte über Eis ($U_i$) des Feuchtesensors (133.1; 233.1; 333.1; 433.1; 533.1) resultiert.

8. Verfahren nach Anspruch 7, **dadurch gekennzeichnet, dass** die lokale Temperatur des Feuchtesensors (133.1; 233.1; 333.1; 433.1; 533.1) so geregelt wird, dass eine konstante relative Feuchte über Eis ($U_i$) in Höhe des Feuchte-Grenzwerts ($U_{i,grenz}$) resultiert.

9. Verfahren nach Anspruch 1, **dadurch gekennzeichnet, dass** der Feuchtesensor (133.1; 233.1; 333.1; 433,1; 533.1) im Temperaturbereich oberhalb von 0°C über das Heizelement (133.2; 233.2; 333.2a; 433.2; 533.2a) zumindest zeitweise beheizt wird, wenn die aus der vom Feuchtesensor (133.1; 233.1; 333.1; 433.1; 533.1) gemessenen relativen Feuchte über Wasser ($U_w$) berechnete relative Feuchte über Eis ($U_i$) einen konstanten, temperaturunabhängigen Feuchte-Grenzwert ($U_{w,grenz}$) überschreitet, wobei der Feuchte-Grenzwert ($U_{w,grenz}$) als Grenzfeuchte bezüglich Sättigung über Wasser gewählt ist.

10. Sensoranordnung, insbesondere zur Bestimmung der relativen Feuchte in Radiosonden, wobei die Sensoranordnung einen Feuchtesensor (133.1; 233.1; 333.1; 433.1; 533.1), einen Temperatursensor (133.2; 233.2; 333.2a; 433.2; 533.2a) sowie ein Heizelement (133.2; 233.2; 333.2a; 433.2; 533.2a) umfasst und der Feuchtesensor (133.1; 233.1; 333.1; 433.1; 533.1) über eine auf das Heizelement (133.2; 233.2; 333.2a; 433.2; 533.2a) einwirkende Steuereinheit (450, 550) zumindest zeitweise beheizbar ist,
**dadurch gekennzeichnet,**
**dass** die Steuereinheit (450; 550) derart ausgebildet ist, um den Feuchtesensor (133.1; 233.1; 333.1; 433.1; 533.1) im Temperaturbereich unterhalb von 0°C über das Heizelement (133.2; 233.2; 333.2a; 433.2; 533.2a) zumindest zeitweise zu beheizen, wenn die aus der vom Feuchtesensor (133.1; 233.1; 333.1; 433.1; 533.1) gemessenen relativen Feuchte über Wasser ($U_w$) berechnete relative Feuchte über Eis ($U_i$) einen konstanten, temperaturunabhängigen Feuchte-Grenzwert ($U_{i,grenz}$) überschreitet, wobei der Feuchte-Grenzwert ($U_{i,grenz}$) als Grenzfeuchte bezüglich Sättigung über Eis gewählt ist.

11. Sensoranordnung nach Anspruch 10, **dadurch gekennzeichnet, dass** der Feuchtesensor (133,1; 233.1; 333.1; 433.1; 533.1) als Plattenkondensator ausgebildet ist, der zwei Elektroden umfasst, zwischen denen ein feuchteempfindliches Polymer angeordnet ist und wobei eine der Elektroden feuchtedurchlässig ausgebildet ist.

12. Sensoranordnung nach Anspruch 10, **dadurch gekennzeichnet, dass** der Temperatursensor (133.2; 233.2; 433.2) und das Heizelement (133.2; 233.2; 433.2) als kombinierte Einheit ausgebildet sind, wobei zum Beheizen des Feuchtesensors (133.1; 233.1; 333.1; 433.1; 533.1) der Messstrom über die Steuereinheit (450; 550) variierbar ist.

13. Sensoranordnung nach Anspruch 11 und 12, **dadurch gekennzeichnet, dass** der Feuchtesensor (133.1; 233.1) auf einer Seite eines Sensor-Substrats (133.0; 233.0; 333.0) angeordnet ist und benachbart hierzu die kombinierte Einheit aus Temperatursensor (133.2; 233.2; 333.2) und Heizelement (133.2; 233.2; 433.2) angeordnet ist.

14. Sensoranordnung nach Anspruch 11, **dadurch gekennzeichnet, dass** der Feuchtesensor (333.1) auf einer Seite eines Sensor-Substrats (333.0) angeordnet ist und benachbart hierzu das Heizelement (333.2b) angeordnet ist, während auf der gegenüberliegenden Seite des Sensor-Substrats (333.0) der Temperatursensor (333.2a) angeordnet ist, der als NTC-Element ausgebildet und mittels Wärmeleitkleber (333.7) am Sensor-Substrat (333.0) befestigt ist.

15. Sensoranordnung nach Anspruch 10, **dadurch gekennzeichnet, dass** der Feuchtesensor (133.1; 233.1; 333.1; 433.1; 533.1), der Temperatursensor (133.2; 233.2; 333.2b; 433.2; 533,2b) sowie das Heizelement (133.2; 233.2; 333.2a; 433.2; 533.2a) in Dünnschichttechnik auf einem Sensor-Substrat (133.0; 233.0; 333.0) aus Silizium aufgebracht sind, das mit einer Isolationsschicht (133.3; 233.3; 333.3) versehen ist.

**Claims**

1. Method for operating a sensor arrangement, in particular for determining the relative humidity above water ($U_w$) in radiosondes, wherein the sensor arrangement comprises a humidity sensor (133.1; 233.1; 333.1; 433.1; 533.1), a temperature sensor (133.2; 233.2; 333.2a; 433.2; 533.2a), and a heating element (133.2; 233.2; 333.2a; 433.2; 533.2a), and the humidity sensor (133.1; 233.1; 333.1; 433.1; 533.1) is at least occasionally heated, **characterized in that** the humidity sensor (133.1; 233.1; 333.1; 433.1; 533.1) is at least occasionally heated via the heating element (133.2; 233.2; 333.2a; 433.2; 533.2a) in the temperature range below 0°C if the relative humidity above ice ($U_i$) computed from the relative humidity above water ($U_w$) measured by the humidity sensor (133.1; 233.1; 333.1; 433.1; 533.1) exceeds a constant, temperature-independent humidity limiting value ($U_{i,limit}$), wherein the humidity limiting value ($U_{i,limit}$) is selected as the limiting humidity with respect to saturation above ice.

2. Method according to Claim 1, **characterized in that** the humidity limiting value ($U_{i,limit}$) in the temperature range below 0°C is selected from the standard definition of the relative humidity above ice ($U_i$) as a constant humidity limiting value ($U_{i,limit}$), wherein the relative humidity above ice ($U_i$) results according to

$$U_i = \frac{e}{e_i(t)} \cdot 100 = U_w \cdot \frac{e_w(t)}{e_i(t)}$$

where:

$U_i$ := relative humidity above ice according to standard definition
$e$ := actual water vapour partial pressure
$e_i(t)$ := water vapour partial pressure upon saturation above an ice surface
$U_w$ := relative humidity above water according to WMO definition
$e_w(t)$ := water vapour partial pressure upon saturation above a water surface.

3. Method according to Claim 1, **characterized in that** the humidity limiting value ($U_{i,limit}$) is selected in the range 60% $\leq U_{i,limit} \leq$ 90%.

4. Method according to Claim 3, **characterized in that** the humidity limiting value ($U_{i,limit}$) is selected according to $U_{i,limit}$ = 75%.

5. Method according to at least one of Claims 1 - 4, **characterized in that** the humidity sensor (133.1; 233.1; 333.1; 433.1; 533.1) is heated via the heating element (133.2; 233.2; 333.2a; 433.2; 533.2a) using a constant heating power if the relative humidity above ice ($U_i$) computed from the relative humidity above water ($U_w$) measured by the humidity sensor (133.1; 233.1; 333.1; 433.1; 533.1) exceeds a first constant, temperature-independent humidity limiting value ($U_{i,limit\_1}$) and the heating is switched off again if the relative humidity above ice ($U_i$) computed from the relative humidity above water ($U_w$) measured by the humidity sensor (133.1; 233.1; 333.1; 433.1; 533.1) falls below a second constant, temperature-independent humidity limiting value ($U_{i,limit\_2}$), wherein the humidity values ($U_{i,limit\_1}$, $U_{i,limit\_2}$) are each selected as limiting humidities with respect to saturation above ice.

6. Method according to Claim 5, **characterized in that** the first humidity limiting value ($U_{i,limit\_1}$) is selected in the range $85\% \leq U_{i,limit\_1} \leq 95\%$ and the second humidity limiting value ($U_{i,limit\_2}$) is selected in the range $65\% \leq U_{i,limit\_2} \leq 75\%$.

7. Method according to at least one of Claims 1 - 4, **characterized in that** the humidity sensor (133.1; 233.1; 333.1; 433.1; 533.1), if the relative humidity above ice ($U_i$) computed from the relative humidity above water ($U_w$) measured by the humidity sensor (133.1; 233.1; 333.1; 433.1; 533.1) exceeds a constant, temperature-independent humidity limiting value ($U_{i,limit}$), is heated in a regulated manner via the heating element (133.2; 233.2; 333.2a; 433.2; 533.2a) in such a way that a constant relative humidity above ice ($U_i$) of the humidity sensor (133.1; 233.1; 333.1; 433.1; 533.1) results.

8. Method according to Claim 7, **characterized in that** the local temperature of the humidity sensor (133.1; 233.1; 333.1; 433.1; 533.1) is regulated in such a way that a constant relative humidity above ice ($U_i$) at the level of the humidity limiting value ($U_{i,limit}$) results.

9. Method according to Claim 1, **characterized in that** the humidity sensor (133.1; 233.1; 333.1; 433.1; 533.1) is at least occasionally heated in the temperature range above 0°C via the heating element (133.2; 233.2; 333.2a; 433.2; 533.2a) if the relative humidity above ice ($U_i$) computed from the relative humidity above water ($U_w$) measured by the humidity sensor (133.1; 233.1; 333.1; 433.1; 533.1) exceeds a constant, temperature-independent humidity limiting value ($U_{i,limit}$), wherein the humidity limiting value ($U_{i,limit}$) is selected as the limiting humidity with respect to saturation above water.

10. Sensor arrangement, in particular for determining the relative humidity in radiosondes, wherein the sensor arrangement comprises a humidity sensor (133.1; 233.1; 333.1; 433.1; 533.1), a temperature sensor (133.2; 233.2; 333.2a; 433.2; 533.2a), and a heating element (133.2; 233.2; 333.2a; 433.2; 533.2a), and the humidity sensor (133.1; 233.1; 333.1; 433.1; 533.1) can be heated at least occasionally via a control unit (450, 550) acting on the heating element (133.2; 233.2; 333.2a; 433.2; 533.2a),
**characterized in that** the control unit (450, 550) is designed to heat the humidity sensor (133.1; 233.1; 333.1; 433.1; 533.1) at least occasionally in the temperature range below 0°C via the heating element (133.2; 233.2; 333.2a; 433.2; 533.2a) if the relative humidity above ice ($U_i$) computed from the relative humidity above water ($U_w$) measured by the humidity sensor (133.1; 233.1; 333.1; 433.1; 533.1) exceeds a constant, temperature-independent humidity limiting value ($U_{i,limit}$), wherein the humidity limiting value ($U_{i,limit}$) is selected as the limiting humidity with respect to saturation above ice.

11. Sensor arrangement according to Claim 10, **characterized in that** the humidity sensor (133.1; 233.1; 333.1; 433.1; 533.1) is designed as a plate capacitor which comprises two electrodes, between which a moisture-sensitive polymer is arranged and wherein one of the electrodes is designed as moisture-permeable.

12. Sensor arrangement according to Claim 10, **characterized in that** the temperature sensor (133.2; 233.2; 433.2) and the heating element (133.2; 233.2; 433.2) are designed as a combined unit, wherein the measurement current via the control unit (450; 550) is variable for the heating of the humidity sensor (133.1; 233.1; 333.1; 433.1; 533.1).

13. Sensor arrangement according to Claims 11 and 12, **characterized in that** the humidity sensor (133.1; 233.1) is arranged on one side of a sensor substrate (133.0; 233.0; 333.0) and the combined unit made of temperature sensor (133.2; 233.2; 333.2) and heating element (133.2; 233.2; 433.2) is arranged adjacent thereto.

14. Sensor arrangement according to Claim 11, **characterized in that** the humidity sensor (333.1) is arranged on one side of a sensor substrate (333.0) and the heating element (333.2b) is arranged adjacent thereto, while the temperature sensor (333.2a), which is designed as an NTC element and is fastened by means of thermally conductive adhesive (333.7) on the sensor substrate (333.0), is arranged on the opposing side of the sensor substrate (333.0).

15. Sensor arrangement according to Claim 10, **characterized in that** the humidity sensor (133.1; 233.1; 333.1; 433.1; 533.1), the temperature sensor (133.2; 233.2; 333.2b; 433.2; 533.2b), and the heating element (133.2; 233.2; 333.2a; 433.2; 533.2a) are applied in thin-film technology to a sensor substrate (133.0; 233.0; 333.0) made of silicon, which is provided with an insulation layer (133.3; 233.3; 333.3).

**Revendications**

1. Procédé de fonctionnement d'un dispositif capteur, en particulier pour déterminer l'humidité relative au-dessus de l'eau (Uw) dans des radiosondes, dans lequel le dispositif capteur comprend un capteur d'humidité (133.1 ; 233.1 ; 333.1 ; 433.1 ; 533.1), un capteur de température (133.2 ; 233.2 ; 333.2a ; 433.2 ; 533.2a) ainsi qu'un élément chauffant (133.2 ; 233.2 ; 333.2a ; 433.2 ; 533.2a) et le capteur d'humidité (133.1 ; 233.1 ; 333.1 ; 433.1 ; 533.1) est chauffé au moins temporairement,
   **caractérisé en ce que** le capteur d'humidité (133.1 ; 233.1 ; 333.1 ; 433.1 ; 533.1) est chauffé au moins temporairement dans une plage de températures inférieure à 0°C par l'intermédiaire de l'élément chauffant (133.2 ; 233.2 ; 333.2a ; 433.2 ; 533.2a) lorsque l'humidité relative au-dessus de la glace (U$_i$), calculée à partir de l'humidité relative au-dessus de l'eau (Uw) mesurée par le capteur d'humidité (133.1 ; 233.1 ; 333.1 ; 433.1 ; 533.1) dépasse une valeur limite d'humidité constante et indépendante de la température (U$_{i,grenz}$), dans lequel la valeur limite d'humidité (U$_{i,grenz}$) est sélectionnée comme étant une valeur limite d'humidité par rapport à la saturation au-dessus de la glace.

2. Procédé selon la revendication 1, **caractérisé en ce que** la valeur limite d'humidité (U$_{i,grenz}$) est sélectionnée dans la plage de températures inférieure à 0°C selon la définition standard de l'humidité relative au-dessus de la glace (U$_i$) comme étant une valeur limite d'humidité constante (U$_{i,grenz}$), dans lequel l'humidité relative au-dessus de la glace (U$_i$) est donnée par :

$$U_i = \frac{e}{e_i(t)} \cdot 100 = U_w \cdot \frac{e_w(t)}{e_i(t)}$$

où :

   U$_i$ := humidité relative au-dessus de la glace selon la définition standard,
   e : pression partielle de vapeur d'eau réelle,
   e$_i$(t) := pression partielle de vapeur d'eau à saturation au-dessus d'une surface de glace,
   Uw:= humidité relative au-dessus de l'eau selon la définition de l'OMM,
   e$_w$(t) := pression partielle de vapeur d'eau à saturation au-dessus d'une surface d'eau.

3. Procédé selon la revendication 1, **caractérisé en ce que** la valeur limite d'humidité (U$_{i,grenz}$) est sélectionnée dans la plage de 60 % $\leq$ U$_{i,grenz}$ $\leq$ 90 %.

4. Procédé selon la revendication 3, **caractérisé en ce que** la valeur limite d'humidité (U$_{i,grenz}$) est sélectionnée selon U$_{i,grenz}$ = 75 %.

5. Procédé selon au moins l'une des revendications 1 à 4, **caractérisé en ce que** le capteur d'humidité (133.1 ; 233.1 ; 333.1 ; 433.1 ; 533.1) est chauffé par l'intermédiaire de l'élément chauffant (133.2 ; 233.2 ; 333.2a ; 433.2 ; 533.2a) avec une puissance de chauffage constante lorsque l'humidité relative au-dessus de la glace (U$_i$) calculée à partir de l'humidité relative au-dessus de l'eau (Uw) mesurée par le capteur d'humidité (133.1 ; 233.1 ; 333.1 ; 433.1 ; 533.1) dépasse une première valeur limite d'humidité (U$_{i,grenz\_1}$) constante et indépendante de la température, et le chauffage est de nouveau interrompu lorsque l'humidité relative au-dessus de la glace (U$_i$) calculée à partir de l'humidité relative au-dessus de l'eau (U$_W$) mesurée par le capteur d'humidité (133.1 ; 233.1 ; 333.1 ; 433.1 ; 533.1) s'abaisse en-dessous d'une seconde valeur limite d'humidité constante et indépendante de la température (U$_{i,grenz\_2}$), dans lequel les valeurs limites d'humidité (U$_{i,grenz\_1}$, U$_{i,grenz\_2}$) sont respectivement sélectionnées en tant qu'humidités limites par rapport à la saturation au-dessus de la glace.

6. Procédé selon la revendication 5, **caractérisé en ce que** la première valeur limite d'humidité (U$_{i,grenz\_1}$) est sélectionnée dans la plage de 85 % $\leq$ U$_{i,grenz\_1}$ $\leq$ 95 % et la seconde valeur limite d'humidité (U$_{i,grenz\_2}$) est sélectionnée dans la plage de 65 % $\leq$ U$_{i,grenz\_2}$ $\leq$ 75 %.

7. Procédé selon au moins l'une des revendications 1 à 4, **caractérisé en ce que** le capteur d'humidité (133.1 ; 233.1 ; 333.1 ; 433.1 ; 533.1), lorsque l'humidité relative au-dessus de la glace (U$_i$), calculée à partir de l'humidité relative au-dessus de l'eau (U$_W$) mesurée par le capteur d'humidité (133.1 ; 233.1 ; 333.1 ; 433.1 ; 533.1) dépasse une valeur limite d'humidité ($U_{i,grenz}$) constante et indépendante de la température, est chauffé de façon régulée par l'intermédiaire de l'élément chauffant (133.2 ; 233.2 ; 333.2a ; 433.2 ; 533.2a) de manière à ce que cela ait pour résultat une humidité relative constante au-dessus de la glace ($U_i$) du capteur d'humidité (133.1 ; 233.1 ; 333.1 ; 433.1 ; 533.1).

8. Procédé selon la revendication 7, **caractérisé en ce que** la température locale du capteur d'humidité (133.1 ; 233.1 ; 333.1 ; 433.1 ; 533.1) est régulée de manière à ce que cela ait pour résultat une humidité relative constante au-dessus de la glace ($U_i$) qui se situe au niveau de la valeur limite d'humidité ($U_{i,grenz}$).

9. Procédé selon la revendication 1, **caractérisé en ce que** le capteur d'humidité (133.1 ; 233.1 ; 333.1 ; 433.1 ; 533.1) est chauffé au moins temporairement dans la plage de températures supérieure à 0°C par l'intermédiaire de l'élément chauffant (133.2 ; 233.2 ; 333.2a ; 433.2 ; 533.2a) lorsque l'humidité relative au-dessus de la glace ($U_i$), calculée à partir de l'humidité relative au-dessus de l'eau ($U_W$) mesurée par le capteur d'humidité (133.1 ; 233.1 ; 333.1 ; 433.1 ; 533.1) dépasse une valeur limite d'humidité ($U_{w,grenz}$) constante et indépendante de la température, dans lequel la valeur limite d'humidité ($U_{w,grenz}$) est sélectionnée comme étant l'humidité limite par rapport à la saturation au-dessus de l'eau.

10. Dispositif capteur, en particulier destiné à déterminer l'humidité relative dans des radiosondes, dans lequel le dispositif de capteur comprend un capteur d'humidité (133.1 ; 233.1 ; 333.1 ; 433.1 ; 533.1), un capteur de température (133.2 ; 233.2 ; 333.2a ; 433.2 ; 533.2a) et un élément chauffant (133.2 ; 233.2 ; 333.2a ; 433.2 ; 533.2a) et le capteur d'humidité (133.1 ; 233.1 ; 333.1 ; 433.1 ; 533.1) peut être chauffé au moins temporairement par l'intermédiaire d'une unité de commande (450, 550) agissant sur l'élément chauffant (133.2 ; 233.2 ; 333.2a ; 433.2 ; 533.2a), **caractérisé en ce que** l'unité de commande (450 ; 550) est conçue pour chauffer le capteur d'humidité (133.1 ; 233.1 ; 333.1 ; 433.1 ; 533.1) au moins temporairement dans la plage de températures inférieure à 0°C par l'intermédiaire de l'élément chauffant (133.2 ; 233.2 ; 333.2a ; 433.2 ; 533.2a) lorsque l'humidité relative au-dessus de la glace ($U_i$), calculée à partir de l'humidité relative au-dessus de l'eau ($U_W$) mesurée par le capteur d'humidité (133.1 ; 233.1 ; 333.1 ; 433.1 ; 533.1) dépasse une valeur limite d'humidité ($U_{i,grenz}$) constante et indépendante de la température, dans lequel la valeur limite d'humidité ($U_{i,grenz}$) est sélectionnée comme étant la valeur limite d'humidité par rapport à la saturation au-dessus de la glace.

11. Dispositif capteur selon la revendication 10, **caractérisé en ce que** le capteur d'humidité (133.1 ; 233.1 ; 333.1 ; 433.1 ; 533.1) est réalisé sous la forme d'un condensateur à plaques comprenant deux électrodes entre lesquelles est disposé un polymère photosensible et dans lequel l'une des électrodes est perméable à l'humidité.

12. Dispositif capteur selon la revendication 10, **caractérisé en ce que** le capteur de température (133.2 ; 233.2 ; 433.2) et l'élément chauffant (133.2 ; 233.2 ; 433.2) sont réalisés sous la forme d'une unité combinée, dans lequel le courant de mesure est amené à varier par l'intermédiaire de l'unité de commande (450 ; 550) pour chauffer le capteur d'humidité (133.1 ; 233.1 ; 333.1 ; 433.1 ; 533.1).

13. Dispositif capteur selon les revendications 11 et 12, **caractérisé en ce que** le capteur d'humidité (133.1 ; 233.1) est disposé sur un côté d'un substrat de capteur (133.0 ; 233.0 ; 333.0) et l'unité combinée constituée du capteur de température (133.2 ; 233.2 ; 333.2) et de l'élément chauffant (133.2 ; 233.2 ; 433.2) est disposée de manière adjacente à celui-ci.

14. Dispositif capteur selon la revendication 11, **caractérisé en ce que** le capteur d'humidité (333.1) est disposé sur un côté d'un substrat de capteur (333.0) et l'élément chauffant (333.2b) est disposé de manière adjacente à celui-ci, tandis que le capteur de température (333.2a) est disposé sur le côté opposé du substrat de capteur (333.0), lequel capteur de température est réalisé sous la forme d'un élément NTC et est fixé au substrat de capteur (333.0) au moyen d'un adhésif thermiquement conducteur (333.7).

15. Dispositif capteur selon la revendication 10, **caractérisé en ce que** le capteur d'humidité (133.1 ; 233.1 ; 333.1 ; 433.1 ; 533.1), le capteur de température (133.2 ; 233.2 ; 333.2b ; 433.2 ; 533.2b) ainsi que l'élément chauffant (133.2 ; 233.2 ; 333.2a ; 433.2 ; 533.2a) sont montés par la technique des couches minces sur un substrat de capteur (133.0 ; 233.0 ; 333.0) en silicium qui est muni d'une couche d'isolation (133.3 ; 233.3 ; 333.3).

10

20 ⌒ 30

Fig. 1

30

32

33

31

Fig. 2

Grenzwerte für WMO-Feuchte

STAND DER TECHNIK

# Fig. 3

Grenzwerte für Standard-Feuchte

Fig. 4a

Grenzwerte für WMO-Feuchte

Fig. 4b

EP 3 415 958 B1

Fig. 5a

Fig. 5b

19

Fig. 6a

Fig. 6b

333.4    333.2a    333.1    333.3    333.2a    333.5

333    333.0    333.7    333.2b    333.6

## Fig. 7a

333.0

333.5

333.4

333

333.4

333.5

333.1    333.2

## Fig. 7b

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0801302 A1
- WO 2014128348 A1
- US 4893508 A
- EP 1505387 A1